(19) Europäisches Patentamt
European Patent Office
Office européen des brevets

(11) **EP 2 909 945 B1**

(12) **FASCICULE DE BREVET EUROPEEN**

(45) Date de publication et mention
de la délivrance du brevet:
**17.08.2016 Bulletin 2016/33**

(51) Int Cl.:
*H04B 1/69* (2006.01)    *H04B 1/7183* (2011.01)

(21) Numéro de dépôt: **13776465.0**

(22) Date de dépôt: **10.10.2013**

(86) Numéro de dépôt international:
**PCT/EP2013/071127**

(87) Numéro de publication internationale:
**WO 2014/060278 (24.04.2014 Gazette 2014/17)**

(54) **MÉTHODE DE DÉTERMINATION DU TEMPS D'ARRIVÉE D'UNE IMPULSION UWB ET RÉCEPTEUR CORRESPONDANT**

VERFAHREN ZUR BESTIMUNG DER ANKUNFTSZEIT EINES UWB-PULSES SOWIE UND ENTSPRECHENDER EMPFÄNGER

METHOD FOR THE DETERMINATION OF THE TIME OF ARRIVAL OF AN UWB PULSE AND CORRESPONDING RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2012 FR 1259861**

(43) Date de publication de la demande:
**26.08.2015 Bulletin 2015/35**

(73) Titulaires:
• **Commissariat à l'Énergie Atomique et aux Énergies Alternatives**
**75015 Paris (FR)**
• **Be Spoon**
**73370 Le Bourget du Lac (FR)**

(72) Inventeurs:
• **DEHMAS, François**
**F-38450 Vif (FR)**
• **MASSON, Gilles**
**38430 Saint-Jean De Moirans (FR)**
• **OUVRY, Laurent**
**F-38000 Grenoble (FR)**

(74) Mandataire: **Brevalex**
**95, rue d'Amsterdam**
**75378 Paris Cedex 8 (FR)**

(56) Documents cités:
**EP-A1- 1 580 901**

• **BAUTISTA F ET AL: "Low power beamforming RF architecture enabling fine ranging and AOA techniques", ULTRA-WIDEBAND (ICUWB), 2011 IEEE INTERNATIONAL CONFERENCE ON, IEEE, 14 septembre 2011 (2011-09-14), pages 585-589, XP032115737, DOI: 10.1109/ICUWB.2011.6058914 ISBN: 978-1-4577-1763-5**
• **HEIRIES V ET AL: "UWB backscattering system for passive RFID tag ranging and tracking", ULTRA-WIDEBAND (ICUWB), 2011 IEEE INTERNATIONAL CONFERENCE ON, IEEE, 14 septembre 2011 (2011-09-14), pages 489-493, XP032115715, DOI: 10.1109/ICUWB.2011.6058892 ISBN: 978-1-4577-1763-5**

**Description**

**DOMAINE TECHNIQUE**

La présente invention concerne le domaine des récepteurs UWB (*Ultra Wide Band*) et plus particulièrement la synchronisation de tels récepteurs.

**ÉTAT DE LA TECHNIQUE ANTÉRIEURE**

Les systèmes de télécommunication ultra-large bande ou UWB de type impulsionnel sont bien connus de l'état de la technique. Dans un tel système, un symbole émis par un émetteur est transmis à l'aide d'une séquence d'impulsions ultra-courtes, de l'ordre de la nanoseconde ou de la centaine de picosecondes.

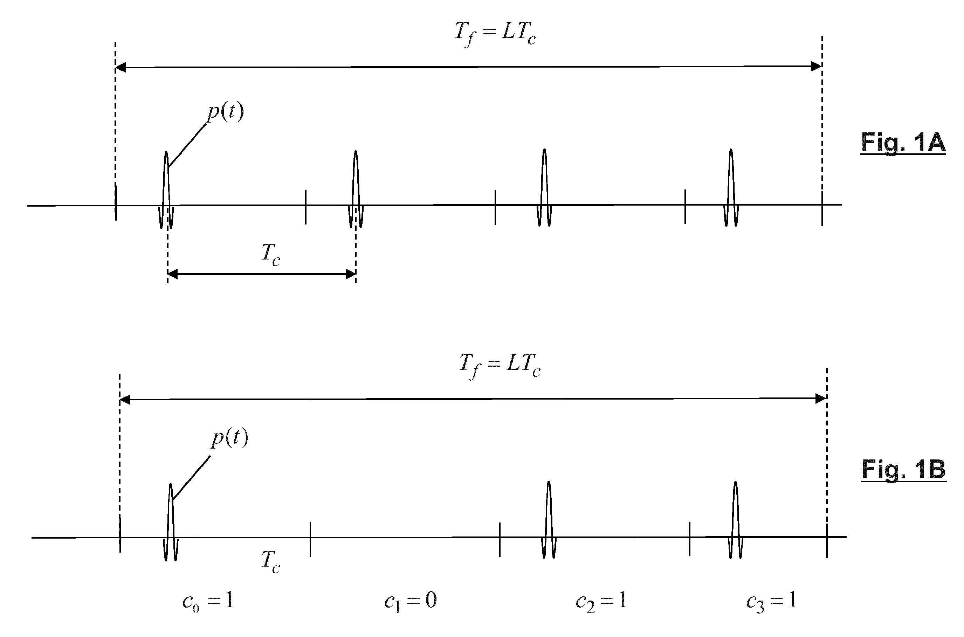

La Figure 1A illustre schématiquement le signal émis par un émetteur UWB, correspondant à un symbole d'information donné. Ce signal est constitué d'impulsions se répétant avec une période $T_c$.

Le signal émis par l'émetteur, en absence de modulation par des symboles de modulation, peut s'exprimer sous la forme suivante :

$$s_{Tx}(t) = \sum_{k=0}^{L-1} p(t - kT_c)\cos\left(2\pi f_0\left(t - kT_c\right) + \varphi_0\right) \tag{1}$$

où $p(t)$ est la forme de l'impulsion élémentaire en bande de base, $f_0$ est la fréquence porteuse, $\varphi_0$, la phase à l'origine, et $T_c$ est la période de répétition. La durée $\tau$ de l'impulsion élémentaire $p(t)$ est sensiblement inférieure à la durée de la période $T_c$.

Ce signal de base peut être modulé en amplitude et/ou en position pour transmettre un symbole par trame constituée par un nombre donné de périodes de répétition. La trame est de durée $T_f = LT_c$ où $L$ est le nombre de périodes dans la trame. Par exemple si la modulation est une modulation de position (PPM pour *Pulse Position Modulation),* le signal modulé peut s'exprimer sous la forme :

$$s_{Tx}(t) = \sum_{k=0}^{L-1} p(t - kT_c - m\varepsilon)\cos\left(2\pi f_0\left(t - kT_c - m\varepsilon\right) + \varphi_0\right) \tag{2}$$

où $\varepsilon$ est un retard de modulation sensiblement inférieur à la période $T_c$ et $m = 0,..,M\text{-}1$ est la position $M$-aire PPM du symbole.

De manière similaire, un symbole peut être transmis par l'émetteur UWB au moyen d'une modulation d'amplitude ou en phase auquel le signal modulé peut s'exprimer alors sous la forme :

$$s_{Tx}(t) = \sum_{k=0}^{L-1} a_m p(t - kT_c)\cos\left(2\pi f_0\left(t - kT_c\right) + \varphi_0\right) \tag{3}$$

*où* $a_m$ est le symbole à transmettre, par exemple un symbole PAM (*Pulse Amplitude Modulation)* ou (D)BPSK ((*Differential*) *Binary Phase Shift Keying*).

Pour séparer les transmissions de différents émetteurs, on peut prévoir que chaque émetteur est associé à un code de sauts temporels $c_k$ (*time hopping code*), $k = 0,..., L\text{-}1$, $c_k \in \{0,...,L\text{-}1\}$ donné, étant entendu que les codes relatifs à différents émetteurs sont orthogonaux. La Fig. 1B illustre le signal non modulé d'un émetteur utilisant un code de sauts temporels. Lorsqu'il est modulé par une modulation en position ou en modulation d'amplitude, le signal émis s'écrit respectivement :

$$s_{Tx}(t) = \sum_{k=0}^{L-1} p(t - c_k T_c - m\varepsilon)\cos\left(2\pi f_0\left(t - kT_c - m\varepsilon\right) + \varphi_0\right) \tag{4}$$

et

$$s_{Tx}(t) = a_m \sum_{k=0}^{L-1} p(t - c_k T_c) \cos\left(2\pi f_0 \left(t - kT_c\right) + \varphi_0\right) \qquad (5)$$

Quel que soit le type de modulation utilisée, le récepteur doit déterminer précisément les temps d'arrivée des impulsions UWB reçues. En effet, le récepteur ne sait généralement pas *a priori* dans quelles fenêtres temporelles apparaissent les impulsions UWB (absence de référence de synchronisation et, le cas échéant, ignorance du code de sauts temporels utilisés). De surcroît, lorsqu'une modulation PPM (*Pulse Position* Modulation) est utilisée, le temps d'arrivée de l'impulsion est porteur de l'information de modulation et doit donc être déterminé précisément.

Une méthode théorique de détermination du temps d'arrivée d'une impulsion UWB consiste à effectuer une corrélation de ce signal avec une succession de répliques locales de l'impulsion, décalées dans le temps, autrement dit une corrélation glissante. Toutefois, une telle méthode n'est pas réalisable en pratique car la brièveté de l'impulsion imposerait d'effectuer un nombre très élevé de corrélations, même pour une fenêtre temporelle relativement courte, par exemple de l'ordre de quelques centaines de ns.

La demande de brevet EP-A-1580901 propose une méthode de détection du temps d'arrivée d'une impulsion dans une fenêtre temporelle qui ne nécessite pas d'effectuer une corrélation glissante.

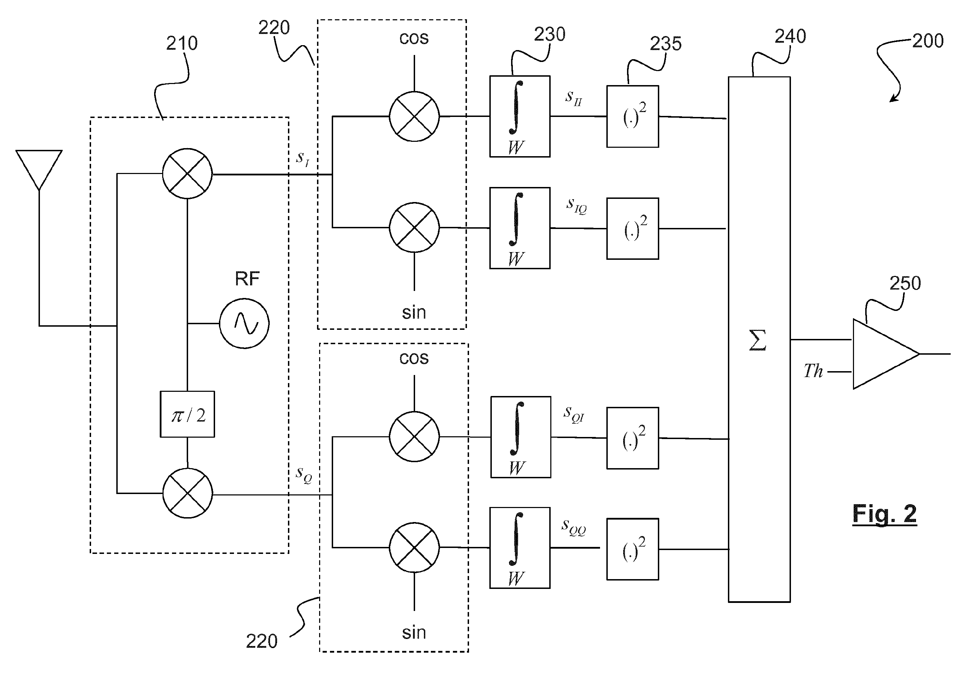

Le principe de cette méthode est illustré en Fig. 2. Elle utilise un récepteur UWB, 200, comprenant un premier étage de démodulation en bande de base, 210, suivi, pour chacune des voies I et Q, d'un étage de corrélation avec deux sinusoïdes basse fréquence en quadrature. Plus précisément, le mélangeur en quadrature 220 effectue une projection du signal en phase, noté $s_I$, sur une base constituée de deux sinusoïdes orthogonales basse fréquence. De manière similaire, le mélangeur en quadrature 220 effectue une projection du signal en quadrature sur cette même base. Les signaux obtenus par projection, notés $s_{II}, s_{IQ}$ pour la voie I et $s_{QI}, s_{QQ}$ pour la voie Q, sont intégrés à l'intérieur d'une fenêtre temporelle (dénommée ci-après fenêtre temporelle d'intégration) dans les intégrateurs 230. Le cas échéant, les résultats d'intégration sont accumulés sur une pluralité de fenêtres temporelles, séparées par la période de répétition du signal UWB ou bien décalées selon un code de sauts temporels. Les signaux intégrés sont sommés quadratiquement en 235,240 et la somme ainsi obtenue est comparée à une valeur de seuil en 250. Si la somme obtenue excède la valeur de seuil, le récepteur conclut qu'une impulsion a été reçue dans la fenêtre temporelle.

Le récepteur UWB 200 ne permet toutefois pas de localiser une impulsion UWB dans la fenêtre temporelle d'intégration.

L'article de G. Masson et al. intitulé « A 1 nJ/b 3.2 to 4.7 GHz UWB 50 Mpulses/s double quadrature receiver for communication and localization » publié dans Proc. of the ESSCIRC 2010, 14-16 Sept. 2010, pp. 502-505, décrit l'architecture d'un tel récepteur et mentionne la possibilité d'utiliser les signaux de corrélation avec les sinusoïdes basse fréquence pour déduire le temps d'arrivée (ToA) de l'impulsion UWB dans la fenêtre temporelle d'intégration. Toutefois, les signaux de corrélation des voies I et Q, c'est-à-dire $s_{II}, s_{IQ}$ pour la voie I et $s_{QI}, s_{QQ}$ pour la voie Q ne permettent pas de déterminer le temps d'arrivée sans ambiguïté.

Le but de la présente invention est par conséquent de proposer une méthode d'estimation précise du temps d'arrivée d'une impulsion UWB dans une fenêtre temporelle d'intégration qui ne nécessite pas de corrélation glissante et qui ne soit pas affectée d'une quelconque ambiguïté.

L'article de F. Batista et al. intitulé « Low power beamforming RF architecture enabling fine ranging and AOA techniques » publié dans Proc. of IEEE International Conférence on Ultra-Wideband (ICUWB), 14 Sept. 2011, pages 585-589, décrit une méthode de formation de faisceau pour une détermination fine du temps d'arrivée et de l'angle d'incidence d'une impulsion UWB. Le premier étage de mélange en quadrature du récepteur ramène le signal reçu en bande de base et le second étage effectue une projection des signaux en quadrature sur une base orthogonale constituée par deux sinusoïdes en quadrature. La projection est une corrélation sur une fenêtre temporelle de durée égale à une période desdites sinusoïdes.

L'article de V. Heires et al. intitulé « UWB backscattering system for passive RFID tag ranging and tracking » publié dans Proc. of IEEE International Conference on Ultra-Wideband (ICUWB), 14 Sept. 2011, pages 489-493, décrit une méthode de mesure de distance d'une étiquette RFID réfléchissant un signal UWB impulsionnel. Le récepteur de l'interrogateur comprend un étage de démodulation en bande de base et un second étage effectuant une projection des signaux en quadrature ainsi obtenus sur une base orthogonale constituée de deux sinusoïdes en quadrature, la projection étant effectuée par une corrélation sur une fenêtre temporelle de durée égale à une période desdites sinusoïdes.

## EXPOSÉ DE L'INVENTION

La présente invention est définie par une méthode de détermination du temps d'arrivée d'une impulsion UWB à un récepteur, comprenant les étapes suivantes :

(a) réception d'un signal UWB contenant ladite impulsion ;

(b) corrélation du signal ainsi reçu avec un premier signal et un second signal constituant une base orthogonale pour obtenir respectivement une première valeur de projection sur ledit premier signal et une seconde valeur de projection sur ledit second signal, la corrélation étant effectuée sur une fenêtre temporelle de durée $T$ ;

ladite méthode comprenant en outre les étapes suivantes :

(c) les premier et second signaux sont deux versions en quadrature d'un même signal périodique de période 2T ;
(d) on estime la phase du signal reçu dans la base orthogonale à partir des première et seconde valeurs de projection ;
(e) on détermine le temps d'arrivée de ladite impulsion à partir de la phase ainsi estimée.

Avantageusement, la phase du signal reçu dans la base orthogonale est obtenue par $\hat{\phi} = \arctan\left(\dfrac{AQ}{AI}\right)$ où $AI$ est la première valeur de projection et $AQ$ est la seconde valeur de projection.

Selon un mode de réalisation, le signal UWB étant modulé à une fréquence porteuse, on effectue une translation en bande de base du signal reçu à l'étape (a) pour obtenir un signal en phase et un signal en quadrature avec un oscillateur local à ladite fréquence porteuse, et l'on corrèle le signal reçu à l'étape (b) en effectuant :

(b1) une première corrélation du signal en phase avec les premier et second signaux de la base orthogonale pour obtenir respectivement des première et seconde valeurs de projection, la corrélation étant effectuée sur la fenêtre de détection de durée $T$ ;
(b2) une seconde corrélation du signal en quadrature avec les premier et second signaux de la base orthogonale pour obtenir respectivement des troisième et quatrième valeurs de projection, la corrélation étant effectuée sur la fenêtre de durée $T$ ;
(d1) la phase du signal reçu dans la base orthogonale étant estimée à partir des première et seconde valeurs de projection et/ou des troisième et quatrième valeurs de projection.

Avantageusement, la phase du signal reçu dans la base orthogonale est estimée par $\hat{\varphi}_I = \arctan\left(\dfrac{IQ}{II}\right)$ où $II$ est la première valeur de projection et $IQ$ est la seconde valeur de projection.

Alternativement, la phase du signal reçu dans la base orthogonale peut être estimée par $\hat{\varphi}_Q = \arctan\left(\dfrac{QQ}{QI}\right)$ où $QI$ est la troisième valeur de projection et $QQ$ est la quatrième valeur de projection.

Alternativement encore, la phase du signal reçu dans la base orthogonale peut être estimée par :

$$\hat{\varphi}_I = \arctan\left(\frac{IQ}{II}\right)$$

si l'énergie du signal en phase, dans la fenêtre de détection, est supérieure à l'énergie du signal en quadrature, dans cette même fenêtre ;

$$\hat{\varphi}_Q = \arctan\left(\frac{QQ}{QI}\right)$$ dans le cas inverse ; où $II$ , $IQ$ , $QI$ , $QQ$ sont respectivement les première, seconde, troisième et quatrième valeurs de projection.

Selon une première variante de la base orthogonale, les premier et second signaux de la base orthogonale sont respectivement donnés par $e_1(t) = \cos\left(2\pi\dfrac{t}{2T} + \beta\right)$ et $e_2(t) = \sin\left(2\pi\dfrac{t}{2T} + \beta\right)$ où $\beta$ est une phase quelconque.

Selon une seconde variante de la base orthogonale, les premier et second signaux de la base orthogonale sont respectivement donnés par $e_1(t) = e(t\text{-}t_\beta)$ et $e_2(t) = e(t\text{-}T/2\text{-}t_\beta)$ où $t_\beta$ est un temps quelconque et $e(t)$ est la fonction définie par $e(t) = +1$ si $0 \geq t < T$ et $e(t) = -1$ si $T \leq t < 2T$.

L'invention concerne également un récepteur destiné à déterminer le temps d'arrivée d'une impulsion UWB comprenant :

- un étage de corrélation d'un signal reçu par le récepteur avec un premier signal ($e_1$) et un second signal ($e_2$) constituant une base orthogonale pour obtenir respectivement une première valeur de projection sur ledit premier signal et une seconde valeur de projection sur ledit second signal, la corrélation étant effectuée sur une fenêtre de détection de durée $T$, les premier et second signaux sont deux versions en quadrature d'un même signal périodique de période $2T$ ;

le récepteur comprenant en outre :

- un estimateur de phase pour estimer la phase du signal reçu dans la base orthogonale à partir des première et seconde valeurs de projection ;
- des moyens de calcul pour déterminer le temps d'arrivée de ladite impulsion à partir de la phase ainsi estimée.

L'estimateur de phase estime avantageusement la phase au moyen de $\hat{\phi} = \arctan\left(\dfrac{AQ}{AI}\right)$ où $AI$ est la première valeur de projection et $AQ$ est la seconde valeur de projection.

Lorsque l'impulsion UWB est modulée à une fréquence porteuse, le récepteur peut comprendre en outre :

- un démodulateur en quadrature incluant un oscillateur local, ledit démodulateur translatant en bande de base le signal reçu par le récepteur pour obtenir un signal en phase et un signal en quadrature avec ledit oscillateur local ;
- l'étage de corrélation comprenant :

un premier étage sur la voie en phase pour corréler le signal en phase avec lesdits premier et second signaux de la base orthogonale pour fournir respectivement lesdites première et seconde valeurs de projection, et
un second étage sur la voie en quadrature pour corréler le signal en quadrature avec lesdits premier et second signaux de la base orthogonale pour fournir respectivement lesdites troisième et quatrième valeurs de projection ;

- l'estimateur de phase estimant la phase du signal reçu dans la base orthogonale à partir des première et seconde valeurs de projection et/ou des troisième et quatrième valeurs de projection.

L'estimateur peut estimer la phase au moyen de $\hat{\varphi}_I = \arctan\left(\dfrac{IQ}{II}\right)$ où $II$ est la première valeur de projection et $IQ$ est la seconde valeur de projection.

Alternativement, l'estimateur peut estimer la phase au moyen de $\hat{\varphi}_Q = \arctan\left(\dfrac{QQ}{QI}\right)$ où $QI$ est la troisième valeur de projection et $QQ$ est la quatrième valeur de projection.

Alternativement encore, l'estimateur peut estimer la phase au moyen de :

$\hat{\varphi}_I = \arctan\left(\dfrac{IQ}{II}\right)$ si l'énergie du signal en phase, dans la fenêtre d'intégration, est supérieure à l'énergie du signal en quadrature, dans cette même fenêtre ;

$\hat{\varphi}_Q = \arctan\left(\dfrac{QQ}{QI}\right)$ dans le cas inverse ; où $II, IQ, QI, QQ$ sont respectivement les première, seconde, troisième et quatrième valeurs de projection.

Selon une première variante de la base orthogonale, les premier et second signaux de la base orthogonale sont respectivement donnés par $e_1(t) = \cos\left(2\pi\dfrac{t}{2T} + \beta\right)$ et $e_2(t) = \sin\left(2\pi\dfrac{t}{2T} + \beta\right)$ où $\beta$ est une phase quelconque.

Selon une seconde variante de la base orthogonale, les premier et second signaux de la base orthogonale sont respectivement donnés par $e_1(t)=e(t-t_\beta)$ et $e_2(t)=e(t-T/2-t_\beta)$ où $t_\beta$ est un temps quelconque et $e(t)$ est la fonction définie par $e(t)=+1$ si $0 \leq t<T$ et $e(t)=-1$ si $T\leq t< 2T$.

Selon une troisième variante de la base orthogonale, les premier et second signaux de la base orthogonale sont respectivement donnés par :

- $$e_1(t) = \cos\left(2\pi\frac{t}{2T} + \beta\right) \text{ et } e_2(t) = \sin\left(2\pi\frac{t}{2T} + \beta\right) \text{ où } \beta \text{ est une phase quelconque, lorsque la largeur de}$$

  l'impulsion est inférieure à un seuil prédéterminé ; et par

- $e_1(t)=e(t-t_\beta)$ et $e_2(t)=e(t-T/2-t_\beta)$ où $t_\beta$ est un temps quelconque et $e(t)$ est la fonction définie par $e(t)=+1$ si $0\leq t<T$ et $e(t)=-1$ si $T\leq t<2T$, lorsque la largeur de l'impulsion est supérieure au dit seuil.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1A, déjà décrite, représente un exemple de signal UWB de type impulsionnel ;
La Fig. 1B, déjà décrite, représente un exemple de signal UWB de type impulsionnel codé par un code de sauts temporels ;
La Fig. 2, déjà décrite, représente de manière schématique la structure d'un récepteur UWB permettant de détecter la présence d'une impulsion UWB dans une fenêtre temporelle ;
La Fig. 3A représente de manière schématique un récepteur UWB selon un premier mode de réalisation de l'invention ;
La Fig. 3B représente de manière schématique un récepteur UWB selon un second mode de réalisation de l'invention ;
La Fig. 4A représente une première fonction d'estimation du temps d'arrivée pour le récepteur de la Fig. 3A ;
La Fig. 4B représente une seconde fonction d'estimation du temps d'arrivée pour le récepteur de la Fig. 3A.

## EXPOSÉ DÉTAILLÉ DE MODES DE RÉALISATION PARTICULIERS

Nous considérerons dans la suite un récepteur destiné à recevoir un signal UWB impulsionnel. Ce signal impulsionnel peut être codé par un code de sauts temporels ou non, non modulé ou bien modulé par des symboles de modulation appartenant à un alphabet de modulation en position, en amplitude, en phase ou autre.

Nous supposerons dans la suite que le récepteur ait à déterminer le temps d'arrivée d'une impulsion à l'intérieur d'une fenêtre temporelle donnée. Comme indiqué dans la partie introductive, ce sera notamment le cas lorsque le récepteur cherche à se synchroniser sur le signal UWB, lorsqu'il cherche à corriger une dérive d'horloge, ou bien recherche un code de sauts temporels utilisé par l'émetteur de ce signal. Ce sera également le cas dans le contexte d'une mesure de distance par un émetteur/récepteur UWB, la distance étant obtenue à partir du temps d'arrivée du signal UWB réfléchi sur la cible dont on souhaite mesurer la distance.

En règle générale, l'impulsion UWB dont on cherche à déterminer le temps d'arrivée peut être approximée sous la forme suivante :

$$p(t) = A_t \cos\left(2\pi f_0(t-t_0) + \alpha\right)\exp\left(-\left(\frac{t-t_0}{\tau}\right)^2\right) \qquad (6)$$

où $A_t$ est l'amplitude de l'impulsion émise, $f_0$ est la fréquence centrale de l'impulsion, c'est-à-dire la fréquence de la porteuse, $t_0$ l'instant correspondant au pic de l'impulsion, $\alpha$ est la phase de l'impulsion au temps $t_0$ et $\tau$ est la largeur de l'impulsion, supposée gaussienne. De manière générale, on définit la largeur d'impulsion comme l'inverse de la largeur de la bande passante à 3 dB.

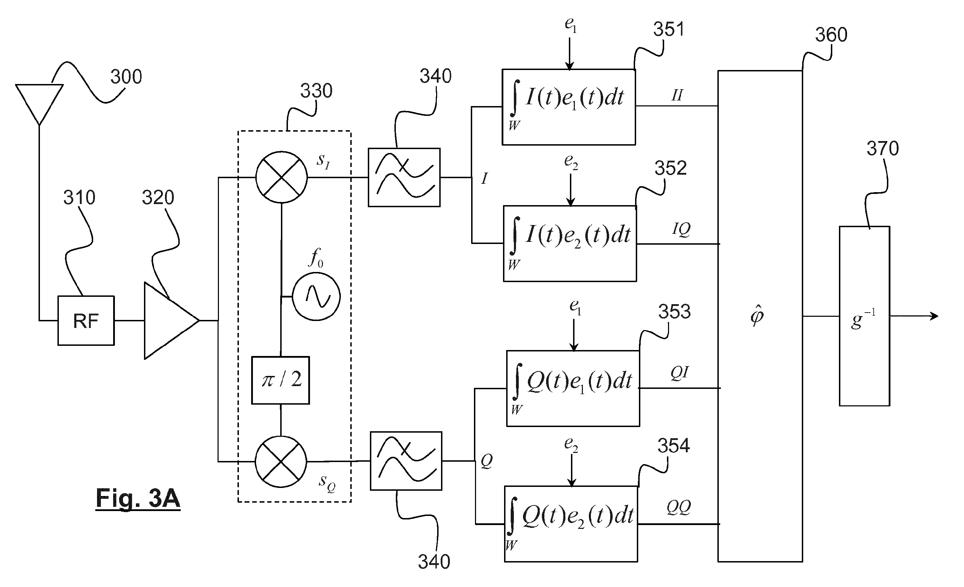

La Fig. 3A représente un récepteur UWB selon un premier mode de réalisation de l'invention.

Ce récepteur comprend une antenne UWB 300, un filtre RF suivi d'un amplificateur faible bruit 320.

Le signal reçu par le récepteur, ainsi filtré et amplifié, est translaté en bande de base par le démodulateur en quadrature 330 utilisant un oscillateur local à la fréquence porteuse $f_0$.

Les signaux obtenus sur les voies I et Q du démodulateur 330 font l'objet d'un filtrage dans les filtres passe-bas 340 avant d'être corrélés en 351-354 avec des signaux $e_1$ et $e_2$ formant une base de projection orthogonale au sens défini plus loin.

Plus précisément, si l'on note $I(t)$ et $Q(t)$ les signaux en phase et en quadrature, après filtrage, les corrélateurs 351 et 352 effectuent une corrélation du signal en phase respectivement avec un premier signal et un second signal constituant la base de projection orthogonale, à savoir :

$$II = \int_W I(t)e_1(t)dt \qquad (7)$$

$$IQ = \int_W I(t)e_2(t)dt \qquad (8)$$

où W est la fenêtre temporelle d'intégration.

De manière similaire, les corrélateurs 353 et 354 effectuent une corrélation du signal en quadrature respectivement avec le premier signal et le second signal de la base de projection orthogonale, à savoir :

$$QI = \int_W Q(t)e_1(t)dt \qquad (9)$$

$$QQ = \int_W Q(t)e_2(t)dt \qquad (10)$$

Les signaux $II, IQ, QI, QQ$ issus des corrélateurs sont numérisés et traités par un estimateur de phase 360. Les moyens de calcul 370 déduisent le temps d'arrivée de l'impulsion UWB de la phase estimée en 360.

Les signaux $e_1$ et $e_2$ sont choisis orthogonaux au sens où ils vérifient :

$$\int_W e_1(t)e_2(t)dt = 0 \qquad (11)$$

Les signaux $e_1$ et $e_2$ sont obtenus à partir d'une fonction périodique $e$ ayant pour période le double de la largeur de la fenêtre temporelle d'intégration, les deux signaux étant en quadrature, c'est-à-dire décalés d'un quart de ladite période. On notera dans la suite $T$ la largeur de la fenêtre temporelle d'intégration.

Selon une première variante, ladite fonction périodique est une fonction sinusoïdale, par exemple $e(t) = \cos\left(2\pi\dfrac{t}{2T}\right)$, les signaux $e_1$ et $e_2$ en quadrature étant obtenus comme suit :

$$e_1(t) = \cos\left(2\pi\frac{t}{2T} + \beta\right) \qquad (12\text{-}1)$$

$$e_2(t) = \sin\left(2\pi\frac{t}{2T} + \beta\right) \qquad (12\text{-}2)$$

où $\beta$ est une phase quelconque. La fenêtre temporelle d'intégration W (de largeur $T$) ne contenant qu'une demi-période des signaux $e_1$ et $e_2$, la base orthogonale est dite sinusoïdale demi-période.

Selon une seconde variante, ladite fonction périodique est une horloge carrée de période $2T$, par exemple telle que :

$$e(t) = +1 \text{ si } 0 \leq t < T \text{ et } e(t) = -1 \text{ si } T \leq t < 2T \qquad (13)$$

les signaux $e_1$ et $e_2$ en quadrature étant obtenus comme suit :

$$e_1(t) = e(t - t_\beta) \qquad (14\text{-}1)$$

$$e_2(t) = e(t - T/2 - t_\beta)$$ 

$$(14\text{-}2)$$

où $t_\beta$ est un temps quelconque. La fenêtre temporelle d'intégration $W$ (de largeur $T$) ne contenant qu'une demi-période des signaux $e_1$ et $e_2$, la base orthogonale est dite demi-créneau.

On vérifiera sans difficulté que les signaux $e_1$ et $e_2$ selon la première ou la seconde variante sont bien orthogonaux au sens de la relation (11).

Sans perte de généralité, nous expliciterons ci-après l'estimateur de phase et les moyens de calcul pour les deux variantes envisagées ci-dessus.

Le signal en phase $I(t)$, à l'entrée des corrélateurs 351-352, et le signal en quadrature $Q(t)$, à l'entrée des corrélateurs 353-354, peuvent s'exprimer sous la forme suivante :

$$I(t) = A_r \cos\left(2\pi f_0 t_0 + \theta\right) \exp\left(-\left(\frac{t - t_0}{\tau}\right)^2\right)$$ 

$$(15\text{-}1)$$

$$Q(t) = -A_r \sin\left(2\pi f_0 t_0 + \theta\right) \exp\left(-\left(\frac{t - t_0}{\tau}\right)^2\right)$$ 

$$(15\text{-}2)$$

où $A_r$ est l'amplitude du signal reçu, dépendant de $A_t$ et de l'atténuation sur le canal de propagation, et $\theta$ est la phase du signal reçu, dépendant de la phase du signal émis, $\alpha$, des caractéristiques du canal de propagation, et de la phase de l'oscillateur local utilisé pour la translation en bande de base.

Dans un but de simplification des calculs, nous supposerons que le temps de propagation entre l'émetteur et le récepteur est nul et que la fenêtre temporelle d'intégration est $[0, T]$, étant bien entendu que les conclusions qui suivent restent valables pour un temps de propagation quelconque.

Selon une première variante de réalisation, on utilise comme base orthogonale la base sinusoïdale demi-période définie par les expressions (12-1) et (12-2).

La projection sur cette base orthogonale est réalisée par les corrélateurs 351-354. On obtient respectivement en sortie de ces corrélateurs :

$$II = \int_0^T A_r \cos\left(2\pi \frac{t}{2T} + \beta\right) \cos\left(2\pi f_0 t_0 + \theta\right) \exp\left(-\left(\frac{t - t_0}{\tau}\right)^2\right) dt$$ 

$$(16\text{-}1)$$

$$IQ = \int_0^T A_r \sin\left(2\pi \frac{t}{2T} + \beta\right) \cos\left(2\pi f_0 t_0 + \theta\right) \exp\left(-\left(\frac{t - t_0}{\tau}\right)^2\right) dt$$ 

$$(16\text{-}2)$$

$$QI = -\int_0^T A_r \cos\left(2\pi \frac{t}{2T} + \beta\right) \sin\left(2\pi f_0 t_0 + \theta\right) \exp\left(-\left(\frac{t - t_0}{\tau}\right)^2\right) dt$$ 

$$(16\text{-}3)$$

$$QQ = -\int_0^T A_r \sin\left(2\pi \frac{t}{2T} + \beta\right) \sin\left(2\pi f_0 t_0 + \theta\right) \exp\left(-\left(\frac{t - t_0}{\tau}\right)^2\right) dt$$ 

$$(16\text{-}4)$$

Les expressions (16-1) à (16-4) peuvent être regroupées en utilisant une forme complexe :

$$ZI = II + iIQ = A_r \cos\left(2\pi f_0 t_0 + \theta\right) \int_0^T \exp\left(i\left(2\pi \frac{t}{2T} + \beta\right) - \left(\frac{t-t_0}{\tau}\right)^2\right) dt \qquad (17\text{-}1)$$

$$ZQ = QI + iQQ = -A_r \sin\left(2\pi f_0 t_0 + \theta\right) \int_0^T \exp\left(i\left(2\pi \frac{t}{2T} + \beta\right) - \left(\frac{t-t_0}{\tau}\right)^2\right) dt \quad (17\text{-}2)$$

ou, plus simplement :

$$ZI = A_r \cos\left(2\pi f_0 t_0 + \theta\right) z \qquad (18\text{-}1)$$

$$ZQ = -A_r \sin\left(2\pi f_0 t_0 + \theta\right) z \qquad (18\text{-}2)$$

avec:

$$z = \frac{\sqrt{\pi}}{2} \tau . \exp\left(-\left(\frac{\pi\tau}{T}\right)^2 + i\left(\frac{2\pi t_0}{T} + \beta\right)\right) \left[ erf\left(\frac{t-t_0}{\tau} - i\frac{\pi\tau}{2T}\right)\right]_{t=0}^{t=T} \qquad (19)$$

où $erf(.)$ est la fonction d'erreur complexe.

L'estimateur de phase 360 estime la phase $\varphi = \arg(ZI) = \arg(ZQ) = \arg(z)$ (modulo $\pi$) du signal en bande de base dans la base orthogonale $(e_1, e_2)$ au moyen de :

$$\hat{\varphi}_I = \arctan\left(\frac{IQ}{II}\right) \qquad (20\text{-}1)$$

ou, alternativement, au moyen de :

$$\hat{\varphi}_Q = \arctan\left(\frac{QQ}{QI}\right) \qquad (20\text{-}2)$$

On notera que les deux estimateurs $\hat{\varphi}_I$ et $\hat{\varphi}_Q$ donnent tous deux une estimation de la phase $\varphi$. Toutefois, selon la valeur de la phase $2\pi f_0 t_0 + \theta$, l'énergie de l'impulsion UWB peut être portée plutôt par le signal $ZI$ ou plutôt par le signal $ZQ$, ainsi que le montrent les expressions (18-1) et (18-2).

On pourra avantageusement choisir l'un ou l'autre des estimateurs en fonction de l'énergie $\left|ZI\right|^2 = A_r^2 \left|z\right|^2 \cos^2\left(2\pi f_0 t_0 + \theta\right)$ et $\left|ZQ\right|^2 = A_r^2 \left|z\right|^2 \sin^2\left(2\pi f_0 t_0 + \theta\right)$. Autrement dit, si l'énergie $P_I$ du signal sur la voie en phase, dans la fenêtre temporelle d'intégration, est supérieure à l'énergie $P_Q$ du signal sur la voie en quadrature, dans cette même fenêtre, on sélectionnera l'estimateur $\hat{\varphi}_I$. On choisira l'estimateur $\hat{\varphi}_Q$ dans le cas inverse. On bénéficiera ainsi toujours du meilleur rapport signal à bruit pour l'estimation de la phase. Autrement dit, on prendra dans ce cas comme estimateur:

$$\hat{\varphi} = \hat{\varphi}_I \ \text{si} \ P_I > P_Q$$

$$\hat{\varphi} = \hat{\varphi}_Q \ \text{si} \ P_I \leq P_Q \qquad (21)$$

Les estimateurs $\hat{\varphi}_I$ et $\hat{\varphi}_Q$, et par suite l'estimateur $\hat{\varphi}$, sont des fonctions injectives de la fenêtre temporelle (ici $[0,T]$) dans l'espace des phases ($[-\pi/2, \pi/2]$), autrement dit les estimateurs en question permettent d'obtenir de manière non ambiguë le temps d'arrivée, contrairement à l'art antérieur. Nous noterons respectivement $g_I(t), g_Q(t), g(t)$ ces fonctions injectives. A une phase estimée $(\hat{\varphi}_I, \hat{\varphi}_Q, \hat{\varphi})$, on peut déduire de manière univoque au moyen de la fonction inverse $\left( g_I^{-1}, g_Q^{-1}, g^{-1} \right)$, le temps d'arrivée de l'impulsion UWB.

Revenant à la Fig. 3A, l'estimateur de phase 360 détermine à partir des valeurs $II, IQ$ et/ou des valeurs $QI, QQ$ issues des corrélateurs 351-354 la phase du signal en bande de base grâce à l'un des estimateurs $\hat{\varphi}_I$, $\hat{\varphi}_Q$, $\hat{\varphi}$.

Les moyens de calcul 370 en déduisent, grâce à la fonction inverse précitée ($g_I^{-1}, g_Q^{-1}, g^{-1}$), le temps d'arrivée de l'impulsion UWB. Les moyens de calcul peuvent comprendre une table de look-up de la fonction inverse ou bien une approximation par intervalles de ladite fonction/ fonction inverse. Des variantes des moyens de calcul peuvent être envisagées par l'homme du métier sans sortir du cadre de la présente invention.

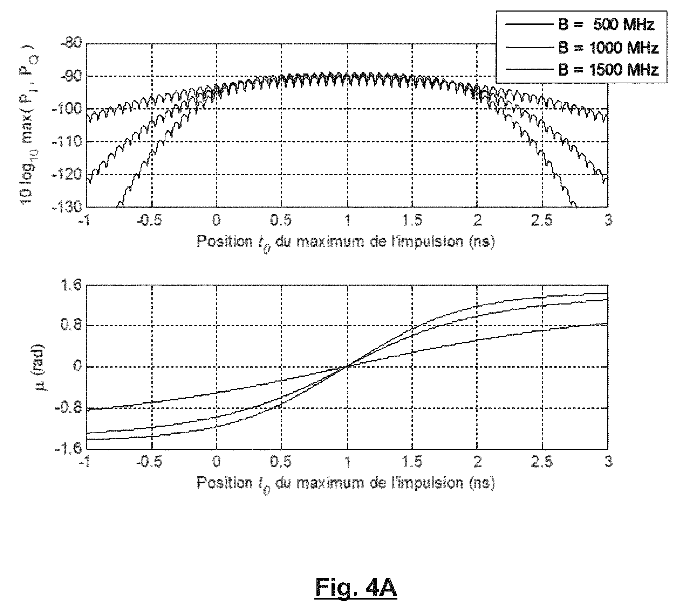

La Fig. 4A représente l'évolution de l'estimateur de phase $\hat{\varphi}$ en fonction du temps d'arrivée de l'impulsion (ici le temps $t_0$ correspondant au maximum de l'impulsion UWB), ce pour différentes largeurs de bande (et donc différentes largeurs r de l'impulsion).

Les valeurs numériques utilisées dans les expressions (18-1), (18-2) et (19) pour l'exemple de la Fig. 4A sont: $f_0 = 4\,GHz$, $T = 2ns$ ; $t_0 = 1ns$ ; $A_r = 1$ ; $\theta = 0$ ; $att_{dB} = -10dB$ ; $\beta = -\pi/2$. On notera qu'une valeur différente de $\beta$ conduit simplement à un décalage de la fonction d'estimation $\varphi$ dans le temps.

On remarquera que la Fig. 4A représente en fait la fonction d'estimation $\hat{\varphi}$ au-delà de la fenêtre temporelle d'intégration $[0,T]$, plus précisément avec une marge de $T/2$ de part et d'autre de cette fenêtre. On constate ainsi que lorsque le centre de l'impulsion « sort » de la fenêtre mais que l'impulsion présente un degré de chevauchement important avec celle-ci, l'estimateur de phase $\hat{\varphi}(t)$ permet encore de détecter le temps d'arrivée (situé alors à l'extérieur de la fenêtre) de manière satisfaisante. Toutefois lorsque le chevauchement diminue, l'estimation se dégrade en raison du faible rapport signal sur bruit (faibles valeurs des énergies $|ZI|^2$ et $|ZQ|^2$ ).

Selon une seconde variante de réalisation, on utilise comme base orthogonale la base demi-créneau définie par les expressions (14-1) et (14-2).

La projection sur cette base orthogonale est réalisée par les corrélateurs 351-354. En sortie de ces corrélateurs, et dans les mêmes hypothèses que pour la première variante, on obtient respectivement les signaux :

$$II = A_r \cos\left(2\pi f_0 t_0 + \theta\right) x' \tag{22-1}$$

$$IQ = A_r \cos\left(2\pi f_0 t_0 + \theta\right) y' \tag{22-2}$$

$$QI = A_r \sin\left(2\pi f_0 t_0 + \theta\right) x' \tag{22-3}$$

$$QQ = A_r \sin\left(2\pi f_0 t_0 + \theta\right) y' \tag{22-4}$$

avec :

$$x' = \frac{\sqrt{\pi}}{2}\tau.\left[ erf\left(\frac{T - t_0}{\tau}\right) - erf\left(\frac{-t_0}{\tau}\right) \right] \tag{23-1}$$

et

$$y' = -\frac{\sqrt{\pi}}{2}\tau.\left[ 2erf\left(\frac{T/2 - t_0}{\tau}\right) - erf\left(\frac{T - t_0}{\tau}\right) - erf\left(\frac{-t_0}{\tau}\right) \right] \tag{23-2}$$

Les expressions (22-1) à (22-4) peuvent être regroupées en utilisant une forme complexe, et en notant $z' = x' + iy'$ :

$$ZI = II + iIQ = A_r \cos\left(2\pi f_0 t_0 + \theta\right) z' \tag{24-1}$$

$$ZQ = QI + iQQ = A_r \sin\left(2\pi f_0 t_0 + \theta\right) z' \tag{24-2}$$

Comme pour la première variante, l'estimateur de de phase 360 estime la phase $\varphi' = \arg(ZI) = \arg(ZQ) = \arg(z')$ (modulo $\pi$) du signal en bande de base dans la base orthogonale $(e_1, e_2)$ au moyen de l'expression (20-1), (20-2) ou (21), les estimateurs étant respectivement notés $\hat{\varphi}'_I, \hat{\varphi}'_Q, \hat{\varphi}'$.

Les estimateurs $\hat{\varphi}'_I$ et $\hat{\varphi}'_Q$, et par suite l'estimateur $\hat{\varphi}'$, sont là aussi des fonctions injectives de la fenêtre temporelle (ici $[0,T]$) dans l'espace des phases $([-\pi/2, \pi/2])$. Elles peuvent donc être inversées sur l'image de $[0,T]$, les fonctions inverses de $\hat{\varphi}'_I, \hat{\varphi}'_Q, \hat{\varphi}'$ étant notées respectivement $g'^{-1}_I, g'^{-1}_Q, g'^{-1}$.

L'estimateur de phase 360 détermine à partir des valeurs $II, IQ$ et/ou des valeurs $QI, QQ$ issues des corrélateurs 351-354 la phase du signal en bande de base grâce à l'un des estimateurs $\hat{\varphi}'_I, \hat{\varphi}'_Q, \hat{\varphi}'$.

Les moyens de calcul 370 en déduisent, grâce à la fonction inverse précitée $\left( g'^{-1}_I, g'^{-1}_Q, g'^{-1} \right)$, le temps d'arrivée de l'impulsion UWB.

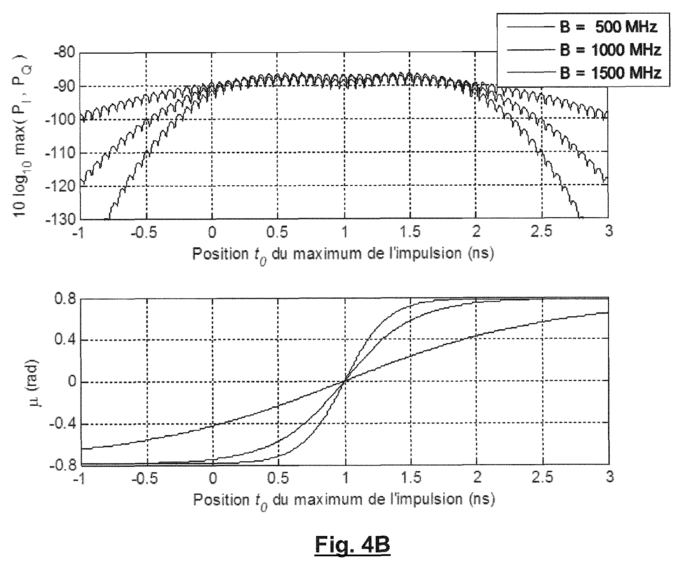

La Fig. 4B représente l'évolution de l'estimateur de phase $\hat{\varphi}'$ en fonction du temps d'arrivée de l'impulsion dans les mêmes conditions que précédemment. Les valeurs numériques sont les mêmes que celles de l'exemple en Fig. 4A, avec en sus $t_\beta = 0$.

Comme pour la Fig. 4A, on remarque que l'on peut déterminer le temps d'arrivée (ici $t_0$) de l'impulsion UWB, y compris lorsque le pic sort de la fenêtre temporelle d'intégration. Cette dernière conclusion n'est toutefois valable que dans la mesure où la bande passante du signal est relativement faible (impulsion relativement large chevauchant par conséquent la fenêtre temporelle d'intégration).

On notera que la courbe de l'estimateur $\hat{\varphi}'$ présente une zone de linéarité plus réduite que celle de l'estimateur $\hat{\varphi}$ dans la zone centrale de la fenêtre. Il en résulte que, pour les excursions de temps d'arrivée supérieures à une valeur seuil, l'estimation à l'aide de la base demi-créneau sera de précision moindre que celle à l'aide de la base sinusoïdale demi-période. En revanche, pour les faibles excursions, la précision sera meilleure puisque la pente dans la zone de linéarité est plus raide.

Il est clair pour l'homme du métier que d'autres bases orthogonales peuvent être envisagées dans la mesure où les signaux constitutifs de cette base sont obtenus à partir d'une fonction périodique e ayant pour période le double de la largeur de la fenêtre temporelle d'intégration, lesdits signaux étant choisis en quadrature.

En particulier, des bases « intermédiaires » entre la base sinusoïdale demi-période et la base demi-créneau peuvent être obtenues en filtrant plus ou moins d'harmoniques de la base demi-créneau à l'aide d'un filtrage passe-bas.

Avantageusement, on disposera d'un jeu de bases orthogonales et on les utilisera de manière adaptative en fonction de la largeur de bande du signal UWB (largeur de l'impulsion UWB). Ainsi, lorsque la largeur de bande est faible (impulsion large), on utilisera de préférence la base demi-créneau et lorsque la largeur de bande est élevée (impulsion étroite), on utilisera la base sinusoïdale demi-période, de manière à garder une même sensibilité quelle que soit la largeur de bande.

Dans le mode de réalisation décrit ci-dessus, on a considéré seulement une seule impulsion UWB apparaissant dans une fenêtre temporelle. Toutefois, lorsque le signal UWB est périodique ou bien lorsque les impulsions successives obéissent à un code temporel, on peut prévoir une pluralité de fenêtres temporelles séparées par la période du signal UWB ou décalées selon le code temporel. Les résultats de corrélation obtenus sur les différentes fenêtres sont alors avantageusement accumulés en sortie de chaque corrélateur avant d'être fournis à l'estimateur de phase 360.

Selon un second mode de réalisation, relatif plus particulièrement à une transmission filaire, l'impulsion UWB dont on cherche à déterminer le temps d'arrivée, n'est pas modulée par une porteuse RF mais transmise en bande de base, autrement dit :

$$p\left(t\right) = A_t \exp\left( -\left(\frac{t - t_0}{\tau}\right)^2 \right) \tag{25}$$

avec les mêmes conventions de notation que précédemment. Dans ce cas, le récepteur UWB n'effectue pas de translation en bande de base au moyen d'un démodulateur en quadrature à la fréquence porteuse mais projette directement le signal reçu sur la base orthogonale.

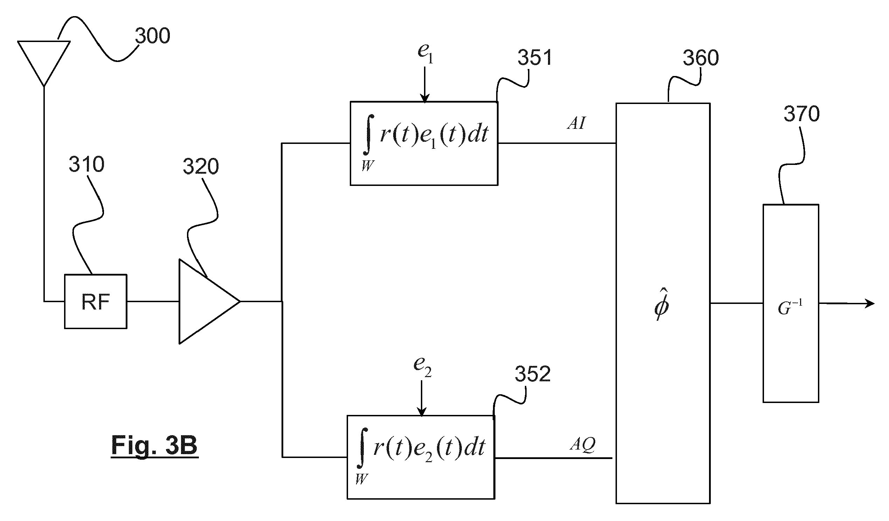

La Fig. 3B représente un récepteur UWB selon un second mode de réalisation de l'invention. Les éléments portant les mêmes numéros de référence que ceux de la Fig. 3A sont identiques ou similaires à ceux déjà décrits.

Plus précisément, le récepteur comprend une antenne 330, un filtre passe bande 310, un amplificateur faible bruit 330. Le signal filtré et amplifié, $r(t)$ est corrélé en 351 et 352 avec des signaux $e_1$ et $e_2$ comme définis plus haut.

En gardant les notations précédentes, on obtient en sortie des corrélateurs 351, 352, respectivement les signaux :

$$AI = \int_W r(t)e_1(t)dt \qquad (26\text{-}1)$$

$$AQ = \int_W r(t)e_2(t)dt \qquad (26\text{-}2)$$

Les signaux $AI, AQ$ sont numérisés et traités par un estimateur de phase, 360. Cet estimateur estime la phase du signal reçu $r(t)$ dans la base orthogonale $(e_1, e_2)$. Les moyens de calcul 370 déterminent le temps d'arrivée de l'impulsion UWB à partir de la phase ainsi estimée.

On envisagera successivement la base orthogonale selon la première et la seconde variante, comme pour le premier mode de réalisation.

Si la base orthogonale est sinusoïdale demi-période, signaux $AI, AQ$ s'expriment sous la forme :

$$AI = \int_0^T A_r \cos\left(2\pi\frac{t}{2T} + \beta\right)\exp\left(-\left(\frac{t-t_0}{\tau}\right)^2\right)dt \qquad (27\text{-}1)$$

$$AQ = \int_0^T A_r \sin\left(2\pi\frac{t}{2T} + \beta\right)\exp\left(-\left(\frac{t-t_0}{\tau}\right)^2\right)dt \qquad (27\text{-}2)$$

Soit encore, en adoptant une notation complexe :

$$Z = AI + iAQ = A_r z \qquad (28)$$

où z est défini en (19).

L'estimateur de phase 360 estime la phase $\varphi = \arg(Z) = \arg(z)$ du signal en bande de base dans la base orthogonale $(e_1, e_2)$ au moyen de :

$$\hat{\phi} = \arctan\left(\frac{AQ}{AI}\right) \qquad (29)$$

La fonction $\hat{\phi}$ est injective de la fenêtre temporelle dans l'espace des phases. Elle peut donc être inversée sur l'image de cette fenêtre dans l'espace des phases. Les moyens de calcul 370 utilisent cette fonction inverse, $G^{-1}$, pour déterminer sans ambiguïté le temps d'arrivée de l'impulsion UWB.

Si la base orthogonale est une base demi-créneau, les signaux en sortie des corrélateurs 351 et 352 s'expriment respectivement comme :

$$AI = A_r x' \qquad (30\text{-}1)$$

$$AQ = A_r y' \qquad (30\text{-}2)$$

et en notation complexe :

$$Z = AI + iAQ = A_r z'$$ (31)

où *x'* et *y'* ont été définis en (23-1) et (23-2).

Comme pour la première variante, l'estimateur de de phase 360 estime la phase $\phi'=\arg(Z)=\arg(z')$ du signal en bande de base dans la base orthogonale $(e_1, e_2)$ au moyen de $\hat{\phi}' = \arctan\left(\dfrac{AQ}{AI}\right)$. La fonction $\hat{\phi}'$ étant là encore injective de la fenêtre temporelle dans l'espace des phases, elle peut être inversée sur l'image de la fenêtre. Les moyens de calcul 370 utilisent cette fonction inverse, $G'^{-1}$, pour déterminer sans ambiguïté le temps d'arrivée de l'impulsion UWB.

Les variantes relatives à l'accumulation sur plusieurs fenêtres successives trouvent à s'appliquer comme pour le premier mode de réalisation sans qu'il soit nécessaire de les détailler davantage ici.

**Revendications**

1. Méthode de détermination du temps d'arrivée d'une impulsion UWB à un récepteur, comprenant les étapes suivantes :

   (a) réception d'un signal UWB contenant ladite impulsion ;
   (b) corrélation du signal ainsi reçu avec un premier signal et un second signal constituant une base orthogonale pour obtenir respectivement une première valeur de projection sur ledit premier signal et une seconde valeur de projection sur ledit second signal, la corrélation étant effectuée sur une fenêtre temporelle de durée *T*;
   (c) on estime la phase du signal reçu dans la base orthogonale à partir des première et seconde valeurs de projection ;
   (d) on détermine le temps d'arrivée de ladite impulsion à partir de la phase ainsi estimée ;
   **caractérisée en ce que** :

   (e) les premier et second signaux sont deux versions en quadrature d'un même signal périodique de période *2T*.

2. Méthode de détermination du temps d'arrivée d'une impulsion UWB selon la revendication 1, **caractérisée en ce que** la phase du signal reçu dans la base orthogonale est obtenue par $\hat{\phi} = \arctan\left(\dfrac{AQ}{AI}\right)$ où *AI* est la première valeur de projection et *AQ* est la seconde valeur de projection.

3. Méthode de détermination du temps d'arrivée d'une impulsion UWB selon la revendication 1, **caractérisée en ce que**, le signal UWB étant modulé à une fréquence porteuse, on effectue une translation en bande de base du signal reçu à l'étape (a) pour obtenir un signal en phase et un signal en quadrature avec un oscillateur local à ladite fréquence porteuse, et que l'on corrèle le signal reçu à l'étape (b) en effectuant :

   (b1) une première corrélation du signal en phase avec les premier et second signaux de la base orthogonale pour obtenir respectivement des première et seconde valeurs de projection, la corrélation étant effectuée sur la fenêtre de détection de durée *T*;
   (b2) une seconde corrélation du signal en quadrature avec les premier et second signaux de la base orthogonale pour obtenir respectivement des troisième et quatrième valeurs de projection, la corrélation étant effectuée sur la fenêtre de durée *T*;
   (c1) la phase du signal reçu dans la base orthogonale étant estimée à partir des première et seconde valeurs de projection et/ou des troisième et quatrième valeurs de projection.

4. Méthode de détermination du temps d'arrivée d'une impulsion UWB selon la revendication 3, **caractérisée en ce que** la phase du signal reçu dans la base orthogonale est estimée par $\hat{\varphi}_I = \arctan\left(\dfrac{IQ}{II}\right)$ où *II* est la première valeur de projection et *IQ* est la seconde valeur de projection.

5. Méthode de détermination du temps d'arrivée d'une impulsion UWB selon la revendication 3, **caractérisée en ce**

**que** la phase du signal reçu dans la base orthogonale est estimée par $\hat{\varphi}_Q = \arctan\left(\dfrac{QQ}{QI}\right)$ où *QI* est la troisième valeur de projection et QQ est la quatrième valeur de projection.

6. Méthode de détermination du temps d'arrivée d'une impulsion UWB selon la revendication 3, **caractérisée en ce que** la phase du signal reçu dans la base orthogonale est estimée par :

$\hat{\varphi}_I = \arctan\left(\dfrac{IQ}{II}\right)$ si l'énergie du signal en phase, dans la fenêtre de détection, est supérieure à l'énergie du signal en quadrature, dans cette même fenêtre ;

$\hat{\varphi}_Q = \arctan\left(\dfrac{QQ}{QI}\right)$ dans le cas inverse ; où *II, IQ, QI, QQ* sont respectivement les première, seconde, troisième et quatrième valeurs de projection.

7. Méthode de détermination du temps d'arrivée d'une impulsion UWB selon l'une des revendications précédentes, **caractérisée en ce que** les premier et second signaux de la base orthogonale sont respectivement donnés par

$$e_1(t) = \cos\left(2\pi\frac{t}{2T} + \beta\right) \text{ et } e_2(t) = \sin\left(2\pi\frac{t}{2T} + \beta\right) \text{ où } \beta \text{ est une phase quelconque.}$$

8. Méthode de détermination du temps d'arrivée d'une impulsion UWB selon l'une des revendications 1 à 6, **caractérisée en ce que** les premier et second signaux de la base orthogonale sont respectivement donnés par $e_1(t)=e(t-t_\beta)$ et $e_2(t)=e(t-T/2-t_\beta)$ où $t_\beta$ est un temps quelconque et $e(t)$ est la fonction définie par $e(t) = +1$ si $0 \le t < T$ et $e(t)=-1$ si $T \le t < 2T$.

9. Récepteur destiné à déterminer le temps d'arrivée d'une impulsion UWB comprenant :

- un étage de corrélation (351-354) d'un signal reçu par le récepteur avec un premier signal ($e_1$) et un second signal ($e_2$) constituant une base orthogonale pour obtenir respectivement une première valeur de projection sur ledit premier signal et une seconde valeur de projection sur ledit second signal, la corrélation étant effectuée sur une fenêtre de détection de durée *T*;
- un estimateur de phase (360) pour estimer la phase du signal reçu dans la base orthogonale à partir des première et seconde valeurs de projection ;
- des moyens de calcul pour déterminer le temps d'arrivée de ladite impulsion à partir de la phase ainsi estimée ;
**caractérisé en ce que** :

- les premier et second signaux sont deux versions en quadrature d'un même signal périodique de période 2*T*.

10. Récepteur selon la revendication 9 **caractérisé en ce que** l'estimateur de phase estime la phase au moyen de

$\hat{\phi} = \arctan\left(\dfrac{AQ}{AI}\right)$ où *AI* est la première valeur de projection et *AQ* est la seconde valeur de projection.

11. Récepteur selon la revendication 9, **caractérisé en ce que**, l'impulsion UWB étant modulée à une fréquence porteuse, le récepteur comprend en outre :

- un démodulateur en quadrature incluant un oscillateur local, ledit démodulateur translatant en bande de base le signal reçu par le récepteur pour obtenir un signal en phase et un signal en quadrature avec ledit oscillateur local ;
- l'étage de corrélation comprenant :

un premier étage sur la voie en phase pour corréler le signal en phase avec lesdits premier et second signaux de la base orthogonale pour fournir respectivement lesdites première et seconde valeurs de projection, et
un second étage sur la voie en quadrature pour corréler le signal en quadrature avec lesdits premier et second signaux de la base orthogonale pour fournir respectivement lesdites troisième et quatrième valeurs de projection ;
- l'estimateur de phase estimant la phase du signal reçu dans la base orthogonale à partir des première et seconde valeurs de projection et/ou des troisième et quatrième valeurs de projection.

**12.** Récepteur selon la revendication 11, caractérisé en ce l'estimateur estime la phase au moyen de

$$\hat{\varphi}_I = \arctan\left(\frac{IQ}{II}\right)$$ où *II* est la première valeur de projection et *IQ* est la seconde valeur de projection.

**13.** Récepteur selon la revendication 11, caractérisé en ce l'estimateur estime la phase au moyen de

$$\hat{\varphi}_Q = \arctan\left(\frac{QQ}{QI}\right)$$ où *QI* est la troisième valeur de projection et *QQ* est la quatrième valeur de projection.

**14.** Récepteur selon la revendication 11, caractérisé en ce l'estimateur estime la phase au moyen de :

$$\hat{\varphi}_I = \arctan\left(\frac{IQ}{II}\right)$$ si l'énergie du signal en phase, dans la fenêtre d'intégration, est supérieure à l'énergie du signal en quadrature, dans cette même fenêtre ;

$$\hat{\varphi}_Q = \arctan\left(\frac{QQ}{QI}\right)$$ dans le cas inverse ; où *II, IQ, QI, QQ* sont respectivement les première, seconde, troisième et quatrième valeurs de projection.

**15.** Récepteur selon l'une des revendications 9 à 14, **caractérisé en ce que** les premier et second signaux de la base orthogonale sont respectivement donnés par $e_1(t) = \cos\left(2\pi\frac{t}{2T} + \beta\right)$ et $e_2(t) = \sin\left(2\pi\frac{t}{2T} + \beta\right)$ où $\beta$ est une phase quelconque.

**16.** Récepteur selon l'une des revendications 9 à 14, **caractérisé en ce que** les premier et second signaux de la base orthogonale sont respectivement donnés par $e_1(t)=e(t-t_\beta)$ et $e_2(t)=e(t-T/2-t_\beta)$ où $t_\beta$ est un temps quelconque et *e(t)* est la fonction définie par *e(t)* =+1 si $0\leq t< T$ et *e(t)* =-1 si $T\leq t< 2T$.

**17.** Récepteur selon l'une des revendications 9 à 14, **caractérisé en ce que** les premier et second signaux de la base orthogonale sont respectivement donnés par :

- $e_1(t) = \cos\left(2\pi\frac{t}{2T} + \beta\right)$ et $e_2(t) = \sin\left(2\pi\frac{t}{2T} + \beta\right)$ où $\beta$ est une phase quelconque, lorsque la largeur de l'impulsion est inférieure à un seuil prédéterminé ; et par
- $e_1(t)=e(t-t_\beta)$ et $e_2(t)=e(t-T/2-t_\beta)$ où $t_\beta$ est un temps quelconque et *e(t)* est la fonction définie par *e(t)* =+1 si $0\leq t<T$ et *e(t)*=-1 si $T\leq t<2T$, lorsque la largeur de l'impulsion est supérieure au dit seuil.

**Patentansprüche**

**1.** Verfahren zur Bestimmung der Ankunftszeit eines UWB-Pulses bei einem Empfänger, umfassend die folgenden Schritte:

(a) Empfangen eines UWB-Signals, das den Puls enthält;
(b) Korrelieren des derart empfangenen Signals mit einem ersten Signal und einem zweiten Signal, die eine Orthogonalbasis bilden, um einen ersten Projektionswert auf das erste Signal beziehungsweise einen zweiten Projektionswert auf das zweite Signal zu erhalten, wobei die Korrelation über ein Zeitfenster der Dauer *T* durchgeführt wird;
(c) man schätzt die Phase des empfangenen Signals in der Orthogonalbasis ausgehend von dem ersten und dem zweiten Projektionswert ab;
(d) man bestimmt die Ankunftszeit des Pulses ausgehend von der derart abgeschätzten Phase;

**dadurch gekennzeichnet, dass**:

(e) das erste und das zweite Signal zwei Quadraturversionen ein und desselben periodischen Signals mit einer Periode 2*T* sind.

2. Verfahren zur Bestimmung der Ankunftszeit eines UWB-Pulses nach Anspruch 1, **dadurch gekennzeichnet, dass** die Phase des empfangenen Signals in der Orthogonalbasis erhalten wird durch $\hat{\phi} = \arctan\left(\frac{AQ}{AI}\right)$ , wobei *AI* der erste Projektionswert ist, und *AQ* der zweite Projektionswert ist.

3. Verfahren zur Bestimmung der Ankunftszeit eines UWB-Pulses nach Anspruch 1, **dadurch gekennzeichnet, dass** man, wenn das UWB-Signal mit einer Trägerfrequenz moduliert ist, zur Erzielung eines Signals in Phase und eines Signals in Quadratur mit einem Lokaloszillator bei der Trägerfrequenz eine Umsetzung des im Schritt (a) empfangenen Signals ins Basisband durchführt, und dass man das im Schritt (b) empfangene Signal korreliert, indem man Folgendes durchführt:

(b1) eine erste Korrelation des Phasensignals mit dem ersten und dem zweiten Signal der Orthogonalbasis, um einen ersten beziehungsweise einen zweiten Projektionswert zu erhalten, wobei die Korrelation über das Erfassungsfenster der Dauer *T* durchgeführt wird;
(b2) eine zweite Korrelation des Quadratursignals mit dem ersten und dem zweiten Signal der Orthogonalbasis, um einen dritten beziehungsweise einen vierten Projektionswert zu erhalten, wobei die Korrelation über das Fenster der Dauer *T* durchgeführt wird;
(c1) wobei die Phase des empfangenen Signals in der Orthogonalbasis abgeschätzt wird ausgehend von dem ersten und dem zweiten Projektionswert und/oder von dem dritten und dem vierten Projektionswert.

4. Verfahren zur Bestimmung der Ankunftszeit eines UWB-Pulses nach Anspruch 3, **dadurch gekennzeichnet, dass** die Phase des empfangenen Signals in der Orthogonalbasis abgeschätzt wird durch $\hat{\varphi}_I = \arctan\left(\frac{IQ}{II}\right)$, wobei *II* der erste Projektionswert ist, und *IQ* der zweite Projektionswert ist.

5. Verfahren zur Bestimmung der Ankunftszeit eines UWB-Pulses nach Anspruch 3, **dadurch gekennzeichnet, dass** die Phase des empfangenen Signals in der Orthogonalbasis abgeschätzt wird durch $\hat{\varphi}_Q = \arctan\left(\frac{QQ}{QI}\right)$, wobei *QI* der dritte Projektionswert ist, und *QQ* der vierte Projektionswert ist.

6. Verfahren zur Bestimmung der Ankunftszeit eines UWB-Pulses nach Anspruch 3, **dadurch gekennzeichnet, dass** die Phase des empfangenen Signals in der Orthogonalbasis abgeschätzt wird durch:

$\hat{\varphi}_I = \arctan\left(\frac{IQ}{II}\right)$, wenn die Energie des Phasensignals in dem Erfassungsfenster größer als die Energie des Quadratursignals in dem gleichen Fenster ist;

$\hat{\varphi}_Q = \arctan\left(\frac{QQ}{QI}\right)$ im umgekehrten Fall;

wobei *II, IQ, QI, QQ* der erste, der zweite, der dritte beziehungsweise der vierte Projektionswert sind.

7. Verfahren zur Bestimmung der Ankunftszeit eines UWB-Pulses nach einem der vorhergehenden Ansprüche, **dadurch gekennzeichnet, dass** das erste und das zweite Signal der Orthogonalbasis gegeben sind durch

$e_1(t) = \cos\left(2\pi\frac{t}{2T} + \beta\right)$ beziehungsweise durch $e_2(t) = \sin\left(2\pi\frac{t}{2T} + \beta\right)$, wobei $\beta$ eine beliebige Phase ist.

8. Verfahren zur Bestimmung der Ankunftszeit eines UWB-Pulses nach einem der Ansprüche 1 bis 6, **dadurch gekennzeichnet, dass** das erste und das zweite Signal der Orthogonalbasis gegeben sind durch $e_1(t) = e(t - t_\beta)$ beziehungsweise durch $e_2(t) = e(t - T/2 - t_\beta)$, wobei $t_\beta$ eine beliebige Zeit ist und e(t) die Funktion ist, die definiert ist durch e(*t*) =+1 wenn 0≤ *t* < *T,* und e(*t*) =-1 wenn *T*≤ *t*< 2*T*.

9. Empfänger, der zur Bestimmung der Ankunftszeit eines UWB-Pulses ausgelegt ist, umfassend:

- eine Stufe (351-354) zum Korrelieren eines durch den Empfänger empfangenen Signals mit einem ersten Signal ($e_1$) und einem zweiten Signal ($e_2$), die eine Orthogonalbasis bilden, um einen ersten Projektionswert auf das erste Signal beziehungsweise einen zweiten Projektionswert auf das zweite Signal zu erhalten, wobei die Korrelation über ein Erfassungsfenster der Dauer *T* durchgeführt wird;

- einen Phasenabschätzer (360) zum Abschätzen der Phase des empfangenen Signals in der Orthogonalbasis ausgehend von dem ersten und dem zweiten Projektionswert;

- Rechenmittel zur Bestimmung der Ankunftszeit des Pulses ausgehend von der derart abgeschätzten Phase; **dadurch gekennzeichnet, dass**:

- das erste und das zweite Signal zwei Quadraturversionen ein und desselben periodischen Signals mit einer Periode 2*T* sind.

10. Empfänger nach Anspruch 9, **dadurch gekennzeichnet, dass** der Phasenabschätzer die Phase abschätzt durch

$$\hat{\phi} = \arctan\left(\frac{AQ}{AI}\right)$$, wobei *AI* der erste Projektionswert ist, und *AQ* der zweite Projektionswert ist.

11. Empfänger nach Anspruch 9, **dadurch gekennzeichnet, dass** dann, wenn der UWB-Puls mit einer Trägerfrequenz moduliert ist, der Empfänger ferner umfasst:

- einen Quadraturdemodulator, der einen Lokaloszillator enthält, wobei der Demodulator zur Erzielung eines Signals in Phase und eines Signals in Quadratur mit dem Lokaloszillator das vom Empfänger empfangene Signal ins Basisband umsetzt;
- wobei die Korrelationsstufe umfasst:

eine erste Stufe auf dem Phasenweg zum Korrelieren des Phasensignals mit dem ersten und dem zweiten Signal der Orthogonalbasis, um den ersten beziehungsweise den zweiten Projektionswert zu liefern, und eine zweite Stufe auf dem Quadraturweg, um das Quadratursignal mit dem ersten und dem zweiten Signal der Orthogonalbasis zu korrelieren, um den dritten beziehungsweise den vierten Projektswert zu liefern;

- wobei der Phasenabschätzer die Phase des empfangenen Signals in der Orthogonalbasis ausgehend von dem ersten und dem zweiten Projektionswert und/oder von dem dritten und dem vierten Projektionswert abschätzt.

12. Empfänger nach Anspruch 11, **dadurch gekennzeichnet, dass** der Abschätzer die Phase abschätzt mit Hilfe von

$$\hat{\varphi}_I = \arctan\left(\frac{IQ}{II}\right)$$, wobei *II* der erste Projektionswert ist, und *IQ* der zweite Projektionswert ist.

13. Empfänger nach Anspruch 11, **dadurch gekennzeichnet, dass** der Abschätzer die Phase abschätzt mit Hilfe von

$$\hat{\varphi}_Q = \arctan\left(\frac{QQ}{QI}\right)$$, wobei *QI* der dritte Projektionswert ist, und *QQ* der vierte Projektionswert ist.

14. Empfänger nach Anspruch 11, **dadurch gekennzeichnet, dass** der Abschätzer die Phase abschätzt mit Hilfe von:

$$\hat{\varphi}_I = \arctan\left(\frac{IQ}{II}\right)$$, wenn die Energie des Phasensignals in dem Erfassungsfenster größer als die Energie des Quadratursignals in dem gleichen Fenster ist;

$$\hat{\varphi}_Q = \arctan\left(\frac{QQ}{QI}\right)$$ im umgekehrten Fall;

wobei *II, IQ, QI, QQ* der erste, der zweite, der dritte beziehungsweise der vierte Projektionswert sind.

15. Empfänger nach einem der Ansprüche 9 bis 14, **dadurch gekennzeichnet, dass** das erste und das zweite Signal der Orthogonalbasis gegeben sind durch $e_1(t) = \cos\left(2\pi\frac{t}{2T} + \beta\right)$ beziehungsweise durch

$e_2(t) = \sin\left(2\pi\frac{t}{2T} + \beta\right)$, wobei $\beta$ eine beliebige Phase ist.

16. Empfänger nach einem der Ansprüche 9 bis 14, **dadurch gekennzeichnet, dass** das erste und das zweite Signal der Orthogonalbasis gegeben sind durch $e_1(t) = e(t-t_\beta)$ beziehungsweise durch $e_2(t) = e(t- T/2 - t_\beta)$, wobei $t_\beta$ eine

beliebige Zeit ist und $e(t)$ die Funktion ist, die definiert ist durch $e(t) = +1$ wenn $0 \leq t < T$ und $e(t) = -1$ wenn $T \leq t < 2T$.

17. Empfänger nach einem der Ansprüche 9 bis 14, **dadurch gekennzeichnet, dass** das erste und das zweite Signal der Orthogonalbasis gegeben sind durch:

- $e_1(t) = cos\left(2\pi \dfrac{t}{2T} + \beta\right)$ beziehungsweise $e_2(t) = sin\left(2\pi \dfrac{t}{2T} + \beta\right)$, wobei $\beta$ eine beliebige Phase ist, wenn die Breite des Pulses kleiner als eine vorbestimmte Schwelle ist; und durch

- $e_1(t) = e(t - t_\beta)$ beziehungsweise $e_2(t) = e(t - T/2 - t_\beta)$, wobei $t_\beta$ eine beliebige Zeit ist und $e(t)$ die Funktion ist, die definiert ist durch $e(t) = +1$ wenn $0 \leq t < T$ und $e(t) = -1$ wenn $T \leq t < 2T$, wenn die Breite des Pulses größer als die Schwelle ist.

**Claims**

1. A method for determining the arrival time of a UWB pulse at a receiver, comprising the following steps of:

   (a) receiving a UWB signal containing said pulse;
   (b) correlating the signal thus received with a first signal and a second signal making up an orthogonal base to obtain respectively a first projection value on said first signal and a second projection value on said second signal, the correlation being carried out on a time window of duration $T$;
   (c) the phase of the received signal is estimated in the orthogonal base from the first and second projection values;
   (d) the arrival time of said pulse is determined from the phase thus estimated, **characterized in that**:
   (e) the first and second signals are two quadrature versions of a same periodical signal of period $2T$;

2. The method for determining the arrival time of a UWB pulse according to claim 1, **characterized in that** the phase of the signal received in the orthogonal base is obtained by $\hat{\phi} = \arctan\left(\dfrac{AQ}{AI}\right)$ where $AI$ is the first projection value and $AQ$ is the second projection value.

3. The method for determining the arrival time of a UWB pulse according to claim 1, **characterized in that**, since the UWB signal is modulated at a carrier frequency, a translation into baseband of the signal received in step (a) is carried out to obtain an in-phase signal and a quadrature signal with a local oscillator at said carrier frequency, and the signal received in step (b) is correlated by carrying out:

   (b1) a first correlation of the in-phase signal with the first and second signals of the orthogonal base to obtain respectively first and second projection values, the correlation being carried out on the detection window of duration $T$;
   (b2) a second correlation of the quadrature signal with the first and second signals of the orthogonal base to obtain respectively third and fourth projection values, the correlation being carried out on the window of duration $T$;
   (c1) the phase of the signal received in the orthogonal base being estimated from the first and second projection values and/or third and fourth projection values.

4. The method for determining the arrival time of a UWB pulse according to claim 3, **characterized in that** the phase of the signal received in the orthogonal base is estimated by $\hat{\varphi}_I = \arctan\left(\dfrac{IQ}{II}\right)$ where $II$ is the first projection value and $IQ$ is the second projection value.

5. The method for determining the arrival time of a UWB pulse according to claim 3, **characterized in that** the phase of the signal received in the orthogonal base is estimated by $\hat{\varphi}_Q = \arctan\left(\dfrac{QQ}{QI}\right)$ where $QI$ is the third projection value and $QQ$ is the fourth projection value.

6. The method for determining the arrival time of a UWB pulse according to claim 3, **characterized in that** the phase of the signal received in the orthogonal base is estimated by:

$$\hat{\varphi}_I = \arctan\left(\frac{IQ}{II}\right)$$ if the energy of the in-phase signal, in the detection window, is higher than the energy of the quadrature signal, in the same window;

$$\hat{\varphi}_Q = \arctan\left(\frac{QQ}{QI}\right)$$ in the reverse case; where *II, IQ, QI, QQ* are respectively the first, second, third and fourth projection values.

7. The method for determining the arrival time of a UWB pulse according to one of the preceding claims, **characterized in that** the first and second signals of the orthogonal base are respectively given by $e_1(t) = \cos\left(2\pi\dfrac{t}{2T} + \beta\right)$

and $e_2(t) = \sin\left(2\pi\dfrac{t}{2T} + \beta\right)$ where $\beta$ is any phase.

8. The method for determining the arrival time of a UWB pulse according to one of claims 1 to 6, **characterized in that** the first and second signals of the orthogonal base are respectively given by $e_1(t)=e(t-t_\beta)$ and $e_2(t)=e(t-T/2-t_\beta)$ where $t_\beta$ is any time and *e(t)* is the function defined by *e(t)*=+1 if $0 \leq t < T$ and *e(t)*=-1 if $T \leq t < 2T$.

9. A receiver for determining the arrival time of a UWB pulse comprising:

   - a correlating stage (351-354) for correlating a signal received by the receiver with a first signal ($e_1$) and a second signal ($e_2$) making up an orthogonal base to obtain respectively a first projection value on said first signal and a second projection value on said second signal, the correlation being carried out on a detection window of duration *T*;
   - a phase estimator (360) for estimating the phase of the signal received in the orthogonal base from the first and second projection values;
   - computing means for determining the arrival time of said pulse from the phase thus estimated ;
   **characterized in that**:

      - the first and second signals are two quadrature versions of a same periodical signal of period 2*T*.

10. The receiver according to claim 9, **characterized in that** the phase estimator estimates the phase by means of

$$\hat{\phi} = \arctan\left(\frac{AQ}{AI}\right)$$ where *AI* is the first projection value and *AQ* is the second projection value.

11. The receiver according to claim 9, **characterized in that**, when the UWB pulse is modulated at a carrier frequency, the receiver further comprises:

   - a quadrature demodulator including a local oscillator, said demodulator translating into baseband the signal received by the receiver to obtain an in-phase signal and a quadrature signal with said local oscillator;
   - the correlating stage comprising:

      a first stage on the in-phase channel for correlating the in-phase signal with said first and second signals of the orthogonal base to provide respectively said first and second projection values, and
      a second stage on the quadrature channel for correlating the quadrature signal with said first and second signals of the orthogonal base to provide respectively said third and fourth projection values;

   - the phase estimator estimating the phase of the signal received in the orthogonal base from the first and second projection values and/or third and fourth projection values.

12. The receiver according to claim 11, **characterized in that** the estimator estimates the phase by means of

$$\hat{\varphi}_I = \arctan\left(\frac{IQ}{II}\right)$$ where *II* is the first projection value and *IQ* is the second projection value.

**13.** The receiver according to claim 11, **characterized in that** the estimator estimates the phase by means of

$$\hat{\varphi}_Q = \arctan\left(\frac{QQ}{QI}\right)$$ where $QI$ is the third projection value and $QQ$ is the fourth projection value.

**14.** The receiver according to claim 11, **characterized in that** the estimator estimates the phase by means of:

$$\hat{\varphi}_I = \arctan\left(\frac{IQ}{II}\right)$$ if the energy of the in-phase signal, in the integration window, is higher than the energy of the quadrature signal, in the same window;

$$\hat{\varphi}_Q = \arctan\left(\frac{QQ}{QI}\right)$$ in the reverse case; where $II$, $IQ$, $QI$, $QQ$ are respectively the first, second, third and fourth projection values.

**15.** The receiver according to one of claims 9 to 14, **characterized in that** the first and second signals of the orthogonal base are respectively given by $e_1(t) = \cos\left(2\pi\frac{t}{2T} + \beta\right)$ and $e_2(t) = \sin\left(2\pi\frac{t}{2T} + \beta\right)$ where $\beta$ is any phase.

**16.** The receiver according to one of claims 9 to 14, **characterized in that** the first and second signals of the orthogonal base are respectively given by $e_1(t)=e(t-t_\beta)$ and $e_2(t)=e(t-T/2-t_\beta)$ where $t_\beta$ isanytimeand $e(t)$ is the function defined by $e(t)= +1$ if $0\le t< T$ and $e(t)= -1$ if $T\le t< 2T$.

**17.** The receiver according to one of claims 9 to 14, **characterized in that** the first and second signals of the orthogonal base are respectively given by:

$$- e_1(t) = \cos\left(2\pi\frac{t}{2T} + \beta\right)$$ and $e_2(t) = \sin\left(2\pi\frac{t}{2T} + \beta\right)$ where $\beta$ is any phase, when the pulse width is lower than a predetermined threshold; and by

$- e_1(t)=e(t-t_\beta)$ and $e_2(t)=e(t-T/2-t_\beta)$ where $t_\beta$ is any time and $e(t)$ is the function defined by $e(t) =+1$ if $0\le t <T$ and $e(t) =-1$ if $T\le t<2T$, when the pulse width is higher than said threshold.

EP 2 909 945 B1

$$T_f = LT_c$$

$p(t)$

$T_c$

**Fig. 1A**

$$T_f = LT_c$$

$p(t)$

$T_c$

**Fig. 1B**

$c_0 = 1$      $c_1 = 0$      $c_2 = 1$      $c_3 = 1$

200

250

240

235

230

$s_{II}$

$s_{IQ}$

$s_{QI}$

$s_{QQ}$

$(\cdot)^2$

$(\cdot)^2$

$(\cdot)^2$

$(\cdot)^2$

$\Sigma$

$Th$

$\int_W$

cos

sin

cos

sin

$s_I$

$s_Q$

220

220

210

RF

$\pi/2$

**<u>Fig. 2</u>**

**Fig. 3A**

**Fig. 3B**

**Fig. 4A**

**Fig. 4B**

**EP 2 909 945 B1**

**Documents brevets cités dans la description**

- EP 1580901 A

**Littérature non-brevet citée dans la description**

- **G. MASSON et al.** A 1 nJ/b 3.2 to 4.7 GHz UWB 50 Mpulses/s double quadrature receiver for communication and localization. *Proc. of the ESSCIRC 2010,* 14 Septembre 2010, 502-505
- **F. BATISTA et al.** Low power beamforming RF architecture enabling fine ranging and AOA techniques. *Proc. of IEEE International Conférence on Ultra-Wideband (ICUWB),* 14 Septembre 2011, 585-589
- **V. HEIRES et al.** UWB backscattering system for passive RFID tag ranging and tracking. *Proc. of IEEE International Conference on Ultra-Wideband (ICUWB),* 14 Septembre 2011, 489-493